# EUROPEAN PATENT SPECIFICATION

(11) **EP 3 777 617 B1**
(45) Date of publication and mention of the grant of the patent: **23.10.2024**
(21) Application number: 19774612.6
(22) Date of filing: 13.03.2019
(51) Int. Cl.: A47G 27/02, B32B 7/027, D03D 27/00, D06M 17/00

(54) **CARPET**
TEPPICH
TAPIS

(30) Priority: 30.03.2018 JP 2018067723
(43) Date of publication of application: 17.02.2021
(73) Proprietor: Toray Industries, Inc., Tokyo 103-8666 (JP)
(72) Inventor: HARADA, Masaru, Otsu-shi, Shiga 520-2141 (JP); TSUCHIKURA, Hiroshi, Otsu-shi, Shiga 520-2141 (JP)
(74) Representative: Kador & Partner Part mbB
(86) International application number: PCT/JP2019/010194
(87) International publication number: WO 2019/188277

(56) References cited:
- EP-B1- 0 194 441
- WO-A1-2014/018221
- JP-A- 2004 197 233
- JP-A- 2004 197 233
- JP-A- 2004 345 102
- JP-A- 2012 082 539
- JP-A- 2012 223 366
- JP-A- 2015 524 517
- JP-A- H03 846
- JP-A- H09 250 052
- JP-A- S61 177 235

## Description

### TECHNICAL FIELD

The present invention relates to a carpet.

### BACKGROUND ART

A lot of tufted carpets are used for seats for use in vehicles such as a railway carriage, an automobile, a ship, or flooring of houses, offices, and the like. On the other hand, to enhance safety in case of fire, flame resistance is strongly desired in such interior products. EP0194441 discloses a cushioning member comprising a cushioning layer and a heat insulating layer including a ground fabric containing a nonmelting fiber A and a carbide-forming type thermoplastic fiber B having main fibers with LOI higher than 25, and a dress covering. To impart the flame resistance, Patent Literature 1 discloses a carpet in which the surface of piles is treated with a flame retardant. In addition, Patent Literature 2 discloses, as a method for kneading a flame retardant into piles, a carpet using threads of a mixture of Nylon 6 and Nylon 66 including an inorganic flame-retardant agent. Furthermore, Patent Literature 3 discloses a method for producing a nonwoven fabric for a tufted carpet ground fabric using flame retardant fibers having meta-aramid and flame-resistant rayon.

On the other hand, Patent Literature 4 and Patent Literature 5 disclose a method for causing a lining layer disposed on the back surface to contain a flame retardant. Furthermore, Patent Literature 6 discloses a method for impregnating a ground fabric with a flame retardant in advance.
Patent Document 7 discloses a cushioning member comprising a flame proofing layer which comprises main fibers having a melting point of at least 300°C, a specific gravity not higher than 1.6 g/cm³ and a limiting oxygen index (LOI) of at least 33 and a reinforcing layer comprising main fibers having a limiting oxygen index (LOI) smaller than 33 but not smaller than 25, a specific gravity not higher than 1.6 g/cm3, a tensile strength of at least 2.9 g/dtex (3.2 g/d) and a toxicity test value of at least 10. The cushioning member has a low weight and an easy moldability and further has heat insulating and flame-proofing characteristics capable of satisfying the FAA fireproof regulations.

### PRIOR ART DOCUMENTS

### PATENT DOCUMENTS

Patent Document 1: Japanese Patent Laid-open Publication No. Hei5-33270
Patent Document 2: Japanese Patent Laid-open Publication No. Sho58-104218
Patent Document 3: Japanese Patent Laid-open Publication No. Sho50-65648
Patent Document 4: Japanese Patent Laid-open Publication No. Hei6-166148
Patent Document 5: Japanese Patent Laid-open Publication No. 2001-73275
Patent Document 6: Japanese Patent Laid-open Publication No. 2012-223366
Patent Document 7: EP 0 194 441 B1

### SUMMARY OF THE INVENTION

### PROBLEMS TO BE SOLVED BY THE INVENTION

However, in the surface treatment as described in Patent Document 1, there is a problem that the texture of the surface of piles of a carpet becomes worse, the surface treatment agent is lost when the carpet is used with shoes, and thus the flame-resistance cannot be maintained. In the method as described in Patent Document 2, there are problems that large-scale facility is required for kneading the flame retardant into yarn for piles, and, when the concentration of kneaded particles is high, spinnability is impaired and the thread qualities become unstable. In the method as described in Patent Document 3, the flame-retardant effect is confirmed only when the material is brought into contact with 15-mm high flame for a short time, that is, 10 seconds, and sufficient flame resistant effect cannot be achieved by only using the fibers having a high flame resistance for the ground fabric. In the method as described in Patent Documents 4 and 5, since the flame resistance is imparted only to the back surface, burning of piles on the front surface cannot be prevented, and the flame resistance is insufficient. Furthermore, in the method as described in Patent Document 6, although it is described that problems such as time-dependent bleed-out can be reduced by defining types and impregnation amounts of the flame retardant, there is a room for solving the problem of bleed-out during long term storage and under a high-temperature and high-humidity condition during transportation. In addition, there is another problem that the total weight of the carpet increases when a flame retardant and an impregnated resin are added. Thus, a proper weight of carpet with a sufficient flame resistance cannot be obtained.

Accordingly, an object of the present invention to provide a carpet having a high flame resistance.

### SOLUTIONS TO THE PROBLEMS

In order to solve the above-described object, the present invention discloses a carpet according to claim 1. Preferred embodiments are defined in claims 2 to 9.

### EFFECTS OF THE INVENTION

The flame-resistant carpet according to the present invention has the above-described constitution, and thus has excellent flame resistant properties.

### BRIEF DESCRIPTION OF THE DRAWING

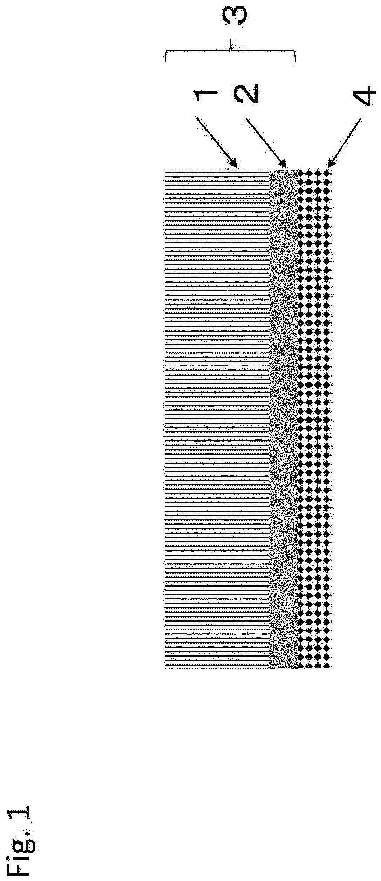

Fig. 1 is a schematic cross-sectional view showing an example of the flame-resistant carpet according to the present invention.

### EMBODIMENTS OF THE INVENTION

The present invention provides a carpet including: i) a pile layer 1; ii) a skin layer 3 including a ground fabric layer 2 that contains a non-melting fiber A having a high-temperature shrinkage rate of 3% or less and a thermal conductivity according to ISO 22007-3 (2008) of 0.060 W/m·K or less, determined as described below, and a carbide-forming type thermoplastic fiber B having an LOI value according to ISO 4589-2 (1996) (JIS K 7201-2 (2007)) of 25 or more; and iii) a backing layer 4. Fig. 1 is a schematic cross-sectional view showing an example of the flame-resistant carpet according to the present invention.

### <High-temperature shrinkage rate>

Herein, the high-temperature shrinkage rate is a rate represented by a value determined by the following equation using L0 and L1 as described below. Fibers for use as a raw material of a nonwoven fabric are allowed to stand under standard conditions (20°C, relative humidity: 65%) for 12 hours. Then, a tension of 0.1 cN/dtex is applied to measure the original length L0, then the fibers are exposed to dry and hot conditions at 290°C without applying a load for 30 minutes, sufficiently cooled under standard conditions (20°C, relative humidity: 65%). Thereafter, a tension of 0.1 cN/dtex is further applied to the fibers to measure the length L1.

High-temperature shrinkage rate = [(L0 - L1)/L0] × 100 (%)

When flames come closer and the heat is applied to thermoplastic fibers, the thermoplastic fibers are molten, and the molten thermoplastic fibers spread through the surface of non-melting fibers (skeleton material) as a thin film. When the temperature further rises, both the fibers are carbonized in due course of time. Since the high-temperature shrinkage rate of the non-melting fibers is 3% or less, the hot portion that has come in contact with the flame and its surroundings do not tend to shrink, and breakage of the ground fabric due to thermal stress between the low-temperature section, which has not come in contact with the flame, and the high-temperature section does not tend to occur. Thus, excellent flame resistant properties can be maintained. From this viewpoint, a lower high-temperature shrinkage rate is preferred. However, even if the portion has not shrunk, significant expansion by heat may cause breakage of the ground fabric due to the thermal stress. Accordingly, the high-temperature shrinkage rate is preferably -5% or more. In particular, the high-temperature shrinkage rate is preferably 0 to 2%.

### <Thermal conductivity>

Thermal conductivity refers to a heat conductive property that is represented by a value. The term "low thermal conductivity" means that when a material is heated from one surface, there is a small increase in temperature of a portion that has not been heated. A material having a thermal conductivity of 0.060 W/m·K or less as measured by a method according to ISO 22007-3 (2008) using a test piece of a nonwoven fabric having a weight per unit area of 200 g/m² and a thickness of 2 mm as measured by a method according to JIS L1913 (2010) (i.e., density of 100 kg/m³) does not conduct heat well, and thus the material can prevent increase in temperature of a backing layer of a carpet when heated from a skin layer. Thus, the material can improve flame resistance of the carpet. Although lower thermal conductivity is preferred, there is a lower limit for available fiber materials around 0.020 W/m·K.

### <LOI value>

The LOI value is a volume percent, in a gas mixture of nitrogen and oxygen, of the minimum amount of oxygen that is required for flame of a material to keep burning. A higher LOI value means that the material is more fire-resistant. Thus, thermoplastic fibers having an LOI value according to JIS K 7201-2 (2007) of 25 or more is resistant to burning. Thus, if the thermoplastic fibers have caught fire from a flame, the fire goes out immediately after removal of the flame. In general, a carbonized film is formed on the small area that has burned, and this carbonized film prevents spreading of the fire. Although a higher LOI value is preferred, there is a higher limit for practically available materials around 65.

### <Ignition temperature>

The ignition temperature is a spontaneous ignition point as measured by a method according to JIS K 7193 (2010).

### <Melting point>

The melting point refers to a temperature as measured by a method according to JIS K 7121 (2012). The melting point is represented by a value of a melting peak as measured at a heating rate of 10°C/min.

### <Non-melting fiber A>

Herein, the non-melting fiber A refers to a fiber which does not liquefy and retains fiber shape when exposed to flames. The non-melting fiber A preferably does not liquefy and ignite at a temperature of 700°C, and more preferably does not liquefy and ignite at a temperature of 800°C or more. Examples of the non-melting fiber that has the above-described high-temperature shrinkage rate within a range defined in the present invention include a flame resistant fiber, a meta-aramid-based fiber, and a glass fiber. The flame resistant fiber is a fiber subjected to flame resistant treatment using a fiber selected from, for example, acrylonitrile-based, pitch-based, cellulose-based, and phenol-based fibers as a raw material. The fibers may be used alone or in combination of two or more at the same time. Among these, preferred is the flame resistant fiber that has a low high-temperature shrinkage rate, and is carbonized by an oxygen-blocking effect owing to a film, which is formed when a carbide-forming type thermoplastic fiber B described below is brought into contact with flame, to further improve the high-temperature heat resistance. Among various flame resistant fibers, the acrylonitrile-based flame-resistant fiber is more preferably used as a fiber having a low specific gravity, flexibility, and excellent flame resistant properties. The flame resistant fiber can be obtained by heating and oxidizing an acrylic-based fiber as a precursor in high-temperature air. Examples of commercially available products include a flame resistant fiber PYRON (registered trademark) manufactured by ZOLTEK Corporation, and Pyromex (registered trademark) from Toho Tenax Co., Ltd. as used in the following Examples and Comparative Examples. In addition, the meta-aramid-based fiber generally has a high high-temperature shrinkage rate, and does not satisfy the high-temperature shrinkage rate defined in the present invention. However, a meta-aramid-based fiber that is treated to reduce the high-temperature shrinkage rate and has a high-temperature shrinkage rate within a range defined in the present invention can be preferably used. In addition, the non-melting fiber that is preferably used in the present invention may be used alone or in a method using the non-melting fiber in combination with other materials. The non-melting fiber preferably has a fiber length of within a range of 30 to 120 mm, and more preferably within a range of 38 to 70 mm. When the fiber length is within a range of 38 to 70 mm, a nonwoven fabric can be made by a general needle punching method or water-jet interlacing method, and the fiber can be easily combined with other materials. For making spun yarn to form a textile or knit, when the fiber length is within a range of 38 to 51 mm, the spun yarn can be made by a general spinning step. The thickness of a single fiber of the non-melting fiber is not particularly limited. However, from the viewpoint of carding process-passing properties, the fineness of the single filament is preferably within a range of 0.1 to 10 dtex.

When the content of the non-melting fiber A in a ground fabric is too low, the function as a skeleton material is insufficient. Thus, a sufficient flame resistance does not tend to be achieved when a carpet is formed. On the other hand, when the content of the non-melting fiber A is too high, that is, the content of the carbide-forming type thermoplastic fiber B is too low, a sufficient carbonized film cannot be formed when brought into contact with flame. Thus, flame resistance tends to be decreased. Accordingly, the content of the non-melting fiber A included in the ground fabric layer is preferably 20 to 80% by weight, and more preferably 30 to 70% by weight.

### <Carbide-forming type thermoplastic fiber B>

The carbide-forming type thermoplastic fiber B used in the present invention has the above-described LOI value within the range defined in the present invention, and a melting point that is lower than the ignition temperature of the non-melting fiber A. Specific examples of the carbide-forming type thermoplastic fiber B include fibers that are formed from a thermoplastic resin selected from the group consisting of anisotropic melt polyester, flame-retardant poly(alkylene terephthalate), flame-retardant poly(acrylonitrile-butadiene-styrene), flame-retardant polysulfone, poly(ether-ether-ketone), poly(ether-ketone-ketone), polyether sulfone, polyalylate, polyarylene sulfide, polyphenyl sulfone, polyetherimide, polyamide imide, and a mixture thereof. They may be used alone or in combination of two or more at the same time. When the LOI value is within the range defined in the present invention, burning in the air can be prevented, and the polymer tends to be carbonized. When the melting point is lower than the ignition temperature of the non-melting fiber A, the molten polymer forms a film on the surface of the non-melting fiber A and between the fibers, and then the film is carbonized to increase the effect of blocking oxygen. Thus, oxidation deterioration of the non-melting fiber A can be prevented, and the carbonized film has excellent flame resistant properties. The melting point of the carbide-forming type thermoplastic fiber B is preferably lower than the ignition temperature of the non-melting fiber A by 200°C or more, and more preferably lower by 300°C or more. Specifically, the melting point is preferably 300°C or less. Among these, from the viewpoint of the LOI value, the range of melting point, and availability, a polyphenylene sulfide fiber (hereinafter, also referred to as a PPS fiber) is most preferred. The PPS fiber forms a crosslinked product when heat-melted, and is readily carbonized. Thus, when the carpet is heated and the pile layer includes thermoplastic fibers, the thermoplastic fibers are mixed with the molten PPS fibers and form crosslinks. Thus, a dripping prevention effect can be exerted. On the other hand, even when the pile layer includes cellulose-based fibers, which are not meltable, sulfuric acid that is produced during thermolysis of PPS fibers accelerates carbonization of the cellulose-based fibers. Thus, a carbonized film is formed on the pile layer, and flame resistance as a carpet can be improved. In addition, even if a polymer has an LOI value out of a range defined in the present invention, the polymer can be preferably used when the polymer is treated with a flame retardant and the flame retardant-treated polymer has an LOI value within a range defined in the present invention. When a phosphorus atom or a sulfur atom is included in a polymer structure or a flame retardant, phosphoric acid or sulfuric acid is produced during thermolysis of the polymer or the flame retardant to activate a mechanism for dehydration and carbonization of a polymer substrate. Thus, the pile layer is carbonized when heated, and flame resistance as a carpet can be improved. When a flame retardant is used, a phosphorus-based or sulfur-based flame retardant is preferred.

In the carbide-forming type thermoplastic fiber B used in the present invention, the above-described thermoplastic resin may be used alone or in a method using the thermoplastic resin in combination with other materials. The fiber length is preferably within a range of 30 to 120 mm, and more preferably within a range of 38 to 70 mm. When the fiber length is within a range of 38 to 70 mm, a nonwoven fabric can be made by a general needle punching method or water-jet interlacing method, and the fiber can be easily combined with other materials. When spun yarn is made, for making the spun yarn by a general spinning step, the fiber length is preferably within a range of 38 to 51 mm. The thickness of a single fiber of the carbide-forming type thermoplastic fiber B is not particularly limited. However, from the viewpoint of carding process-passing properties, the fineness of the single filament is preferably within a range of 0.1 to 10 dtex.

The PPS fiber preferably used in the present invention is a synthetic fiber including a polymer having a polymer structural unit containing -(C₆H₄-S)- as a main structural unit. Representative examples of the PPS polymer include polyphenylene sulfide, polyphenylenesulfide sulfone, and polyphenylenesulfide ketone; a random copolymer and a block copolymer thereof; and a mixture thereof. As a particularly preferred PPS polymer, polyphenylene sulfide containing a p-phenylene sulfide unit represented by -(C₆H₄-S)- as a main structural unit of the polymer preferably in an amount of 90% by mole or more is desired. From the viewpoint of mass, polyphenylene sulfide containing 80 % by weight of the p-phenylene sulfide unit is preferred, and polyphenylene sulfide containing 90 % by weight or more of the p-phenylene sulfide unit is more preferred.

The PPS fiber that is preferably used in the present invention may be used alone or in a method using the PPS fiber in combination with other materials, and may be in the form of either a filament or a staple. When the staple is spun and used, the fiber length is preferably within a range of 30 to 120 mm, and more preferably within a range of 38 to 70 mm. When the fiber length is within a range of 38 to 70 mm, a nonwoven fabric can be made by a general needle punching method or water-jet interlacing method, and the fiber can be easily combined with other materials. When spun yarn is made, for making the spun yarn by a general spinning step, the fiber length is preferably within a range of 38 to 51 mm. The thickness of a PPS single fiber is not particularly limited. However, from the viewpoint of carding process-passing properties, the fineness of the single filament is preferably within a range of 0.1 to 10 dtex.

The method for the manufacture of the PPS fiber used in the present invention is preferably a method including melting a polymer having the above-described phenylene sulfide structural unit above the melting point of the polymer, and spinning the polymer through a spinneret to form a fiber. The spun fiber is an undrawn PPS fiber as it is. Most of the undrawn PPS fiber has an amorphous structure, and has a high elongation at break. Since such a fiber has a low thermal dimensional stability, a drawn fiber having an enhanced fiber strength and an improved thermal dimensional stability produced by spinning followed by heat drawing to impart orientation is commercially available. As the PPS fiber, a plurality of PPS fibers such as "TORCON" (registered trademark) (manufactured by Toray Industries, Inc.), "PROCON" (registered trademark) (manufactured by TOYOBO CO., LTD.) are in circulation.

In the present invention, as long as the scope of the present invention is satisfied, the above-described undrawn PPS fiber and the above-described drawn fiber can be used in combination. Of course, a drawn fiber and an undrawn fiber of fibers that satisfy the scope of the present invention may be used in combination instead of the PPS fibers.

When the content of the carbide-forming type thermoplastic fiber B included in a ground fabric is too low, thermoplastic fibers do not tend to be sufficiently spread between the skeleton material non-melting fibers as a thin film. Thus, flame resistance is decreased when a carpet is formed. On the other hand, when the content of the carbide-forming type thermoplastic fiber B included is too high, the ground fabric at a portion that comes in contact with flame becomes fragile, and cracks tend to be formed from the portion which has become fragile. Thus, flame resistance tends to be decreased. The content of the carbide-forming type thermoplastic fiber B included in the ground fabric layer is preferably 20 to 80% by weight, and more preferably 30 to 70% by weight.

Herein, as a form of fibers used in the ground fabric, in order to achieve sufficient intertwisting or interlacing properties between the fibers, the number of crimp of the fiber is preferably 7 crimps/2.54 cm or more, and more preferably 12 crimps/2.54 cm or more. The short fibers of the non-melting fiber A and the carbide-forming type thermoplastic fiber B preferably have, in order to obtain further uniform nonwoven fabrics or make spun yarn consistently, an equal length. It is not necessary for the short fibers to have definitely identical length, but the lengths of the short fibers may vary about ±5% with respect to the length of the non-melting fiber A. From this viewpoint, with respect to both the fiber lengths of the non-melting fibers and the fiber lengths of the molten fibers, the fiber lengths are preferably within a range of 30 to 120 mm. In a nonwoven fabric, the lengths are more preferably within a range of 38 to 70 mm. In spun yarn, the lengths are more preferably within a range of 38 to 51 mm.

The construction of the ground fabric used in the present invention is not limited as long as the fabric can hold piles. When a nonwoven fabric is formed using the above-described short fibers, the nonwoven fabric is manufactured by a needle punching method, a water-jet interlacing method, or the like. The nonwoven fabric preferably has a low resistance while piercing with a needle of a tufting machine and has cushioning properties. On the other hand, when a textile or knit is formed, spun yarn is made by a general manufacturing method, and the spun yarn is used for forming the textile or knit. In the textile, the textile construction is not particularly limited. Also, in the knit, the knit construction is not particularly limited, and may be any of weft knit, circular knit, or warp knit. From the viewpoint of reducing elongation of the ground fabric by process tension in the step of manufacturing a carpet, warp knit is preferred.

The ground fabric may be, after a nonwoven fabric or a textile or knit is formed, subjected to heat setting using a stenter, or calendering treatment. Of course, a gray fabric of the ground fabric may be used as it is. The setting temperature may be a temperature at which a high-temperature shrinkage rate reducing effect can be achieved. The setting temperature is preferably 160 to 240°C, and more preferably 190 to 230°C. The calendering treatment is a treatment for controlling the thickness or density of the ground fabric, and performed under conditions that do not affect processing properties for introducing piles of a carpet. Thus, the speed, pressure, and temperature of the calendering are not limited. The weight per unit area of the ground fabric is preferably within a range of 50 to 400 g/m². When the weight per unit area is too light, tuft properties cannot be ensured. On the other hand, when the weight per unit area is too heavy, tuft cannot be introduced, or the total weight of a carpet becomes too heavy.

The ground fabric layer obtained as described above has an excellent flame resistance even without containing a flame retardant including an organic flame retardant such as a halogen-based flame retardant or a phosphorus-based flame retardant, and an inorganic flame retardant such as a metal hydroxide or an antimony-based flame retardant. Herein, the flame retardant in the expression "without containing a flame retardant" is not a flame retardant contained in the above-described carbide-forming type thermoplastic fiber B that constitutes the ground fabric layer for controlling the LOI value. The expression "without containing a flame retardant" means that it is not necessary for the ground fabric layer to contain any flame retardant in addition to the non-melting fiber A and the carbide-forming type thermoplastic fiber B. The piles in the present invention are grafted in the ground fabric by a tufting machine. For the pile layer, any forms of pile such as a cut pile, a loop pile and a cut and loop pile can be used.

As a pile material that constitutes a pile, a material generally used as a carpet material may be used. Examples of the pile material include natural fibers such as wool, linen, and cotton, and synthetic resin fibers such as polyamide-based fibers, polyester-based fibers, polyacrylic-based fibers, and polypropylene-based fibers. Among these, for the pile layer, polyester-based fibers, polyamide-based fibers, acrylic-based fibers, cellulose-based fibers, natural fibers, and a mixture thereof are preferably used.

It is preferred to use pile yarn having a pile fineness of 800 to 4000 dtex. When the pile yarn having a pile fineness within the above-described range is used, the carpet is attractive in appearance and comfortable to the tread. When the fineness is less than 800 dtex, the carpet becomes see-through and gives a poor expression. When the fineness exceeds 4000 dtex, the carpet is uneconomical and becomes too heavy. Thus, there are problems in, for example, transportation and storage.

In the present invention, by carbonization effect of the ground fabric layer, when the pile layer side is brought into contact with flames, flame resistant properties of a pile layer is achieved and spread of flames to a backing layer is prevented. The weight ratio of the pile layer to the ground fabric layer is preferably 5 or less. When the weight ratio of the pile layer is too high, flame resistance may sometimes be improved by an air-blocking effect of the pile layer. In particular, when the pile material is a thermoplastic fiber, dripping occurs during burning, and the dripped material may sometimes catch fire to decrease flame resistance, and the carpet becomes too heavy. Thus, there are problems in, for example, transportation and storage.

When spread of flames occur on the surface of tuft, an organic flame retardant such as a halogen-based flame retardant or a phosphorus-based flame retardant, or an inorganic flame retardant such as a metal hydroxide or an antimony-based flame retardant may be applied to a pile layer by a method such as spray treatment.

Principal examples of the above-described organic flame retardant include halogen-based flame retardants such as halogenated diphenyl sulfides; phosphorus-based flame retardants such as ammonium polyphosphate and triphenyl phosphate; tetrabromobisphenol A and derivatives thereof; bromine-based flame retardants such as hexabromobenzene, decabromodiphenyl ether, tetrabromoethane, tetrabromobutane, and hexabromocyclododecane; and chlorine-based flame retardants such as chlorinated paraffin, diphenyl chloride, perchloropentacyclodecane, and chlorinated naphthalene. Examples of the above-described inorganic flame retardant include aluminum hydroxide, magnesium hydroxide, zirconium hydroxide, basic magnesium carbonate, dolomite, hydrotalcite, calcium hydroxide, barium hydroxide, hydrates of tin oxide, hydrates of inorganic metal compounds such as hydrates of tin oxide, borax, and antimony-based flame retardants such as antimony pentoxide. The amount of the flame retardant applied is not limited as long as qualities such as texture and bleed-out are not compromised.

The backing layer may be used in the form of a coating with paste, a sheet laminate, or the like, depending on applications of the tufted carpet. The resins used are the following. Examples of the resin include acrylic-based resins, urethane-based resins, polyvinyl chloride, polyethylene, polypropylene, and an ethylenevinyl acetate copolymer (EVA). As rubber latex, examples of rubber components include styrene-butadiene rubber (SBR), acrylonitrile-butadiene rubber (NBR), methylmethacrylate-butadiene rubber (MBR), or natural rubber.

The carpet according to the present invention can be obtained by grafting pile yarn onto a ground fabric using a tufting machine to form a surface pile layer that constitutes a skin layer, laminating a backing layer onto the back surface of the skin layer to form a combined structure.

The weight per unit area of the carpet of the present invention is, from the viewpoints of both flame resistance, and storage and transportation, preferably within a range of 300 to 2500 g/m², and more preferably 350 to 2300 g/m².

The flame-retardant carpet of the present invention obtained as described above is excellent in flame resistance, and suitable for applications that require a high flame resistance, such as applications in an automobile, a railway, and an aircraft.

### EXAMPLES

The present invention is specifically described with reference to examples below. But the present invention is not limited to the examples. Various variations and modifications are possible without departing from the spirit and scope of the present invention. Methods for measurement of various characteristics used in the examples are provided below.

### [Weight per unit area]

Weight of a 30-cm square sample was measured, and the weight per 1 m² (g/m²) was calculated and shown as the weight per unit area.

### [Evaluation of flame retardant grade]

### (1) Flame retardant test for railway vehicle in Japan

Ministerial Ordinance No. 83 of the Ministry of Land, Infrastructure and Transport, an alcohol combustion test, which is defined as a combustion test method of nonmetallic materials for a railway carriage, was performed. Test samples of "flame retardant grade" or above, that is, test samples that satisfied any one of the criteria "flame retardant grade", "extremely flame retardant grade", and "incombustible grade" were evaluated to be "passed" in this test. "Passed" was denoted by "A", and "failed" was denoted by "F".

### (2) 45-Degree micro-burner test under the Fire Service Act

According to a 45-degree micro-burner test method set forth in the Fire Service Act in Japan, test results that satisfied a carbonized area of 30 cm² or less, afterflame time of 3 seconds or less, and afterglow time of 5 seconds or less were evaluated to be "passed" in this test, and "passed" was denoted by "B". Test results of especially good flame retardant grade with a carbonized area of 20 cm² or less and afterflame time of 3 seconds or less were denoted by "A". Test results that did not meet the criteria were denoted by "F".

### (3) Flame retardant test for automotive interior materials

According to a horizontal combustion test FMVSS No. 302 for automotive interior materials set forth in JIS D 1201 (1998), test result that satisfied a burning velocity of 4 inches (102 mm)/min or less were evaluated to be "passed" in this test. Test results that satisfied a burning velocity of 4 inches (102 mm)/min or less were denoted by "B", and 3 inches (76 mm)/min or less were denoted by "A". Test result that did not meet the criteria were denoted by "F".

Next, terms used in the following examples and comparative examples are described below.

### <Drawn PPS fiber>

As drawn PPS fibers, a test piece of "TORCON" (registered trademark) manufactured by Toray Industries, Inc. with product number S371 having a single filament fineness of 2.2 dtex (diameter: 14 um) and a cut length of 51 mm was used. This PPS fiber has an LOI value of 34 and a melting point of 284°C.

### <Flame retardant fiber>

A test piece of a 1.7 dtex flame retardant fiber PYRON manufactured by ZOLTEK Corporation having a cut length of 51 mm was used. PYRON had a high-temperature shrinkage rate of 1.6%. When the test piece was heated according to a method set forth in JIS K 7193 (2010), the test piece did not ignite even at 800°C, and thus the ignition temperature was 800°C or more. PYRON had a thermal conductivity of 0.042 W/m·K.

### <Polyethylene terephthalate (PET) fiber>

As drawn PET fibers, a test piece of "TETRON" (registered trademark) manufactured by Toray Industries, Inc. having a single filament fineness of 2.2 dtex (diameter: 14 um) and a cut length of 51 mm was used. This PET fibers has an LOI value of 22 and a melting point of 267°C.

### <Carbon fiber>

A test piece of "TORAYCA" (registered trademark) manufactured by Toray Industries, Inc. with a diameter of 30 um having a cut length of 51 mm was used. This carbon fiber had a thermal conductivity of 8.4 W/m·K.

### <Drawn polyester fiber>

As drawn polyester fibers, a test piece of "TETRON" (registered trademark) manufactured by Toray Industries, Inc. with a product number T9615 having a single filament fineness of 2.2 dtex (diameter: 14 um) and a cut length of 51 mm was used. This polyester fiber had an LOI value of 22 and a melting point of 256°C.

### Example 1

### (Manufacture of ground fabric)

Drawn PPS fibers and flame retardant fibers were mixed by an opener, then further mixed by a blower, and thereafter the mixed fibers were passed through a carding machine to prepare a sliver. The resulting sliver had a weight of 310 grains/6 yards (1 grain = 1/7000 pound) (20.09 g/5.486 m). Next, the sliver was drawn by a drawing frame with a total drafting setting of 8 times to obtain a sliver having a weight of 290 grains/6 yards (18.79 g/5.486 m). Then, the drawn sliver was twisted by a roving frame until the twist rate reached 0.55 T/2.54 cm, and drawn by 7.4 times to give a roving yarn having a weight of 250 grains/6 yards (16.20 g/5.486 m). The roving yarn was twisted by a spinning machine until the twist rate reached 16.4 T/2.54 cm, drawn to give a total draft of 30 times, and twisted to give a spun yarn with a cotton count of 30. The resulting spun yarn was over-twisted by a double twister until the twist rate reached 64.7 T/2.54 cm to give a 2-ply yarn with a cotton count of 15. The weight ratio of the drawn PPS fibers to the flame retardant fibers in the spun yarn was 60 to 40.

The resulting spun yarns were woven using a rapier loom by plain weaving with a warp of 50 threads/inch (2.54 cm) and a weft of 50 picks/inch (2.54 cm).

Next, the woven material was scoured in warm water containing a surfactant at 80°C for 20 minutes, dried by a stenter at 130°C, and further subjected to heat setting by a stenter at 230°C to afford a ground fabric with a warp of 54 threads/inch (2.54 cm), a weft of 53 picks/inch (2.54 cm) and a weight per unit area of 187 g/m².

### (Manufacture of carpet)

The resulting ground fabric was tufted with nylon (Nylon 66) filaments having a single filament fineness of 40 dtex and a total fineness of 2400 dtex using a cut pile tufting machine at a density in the weft direction of 35 piles/10 cm, a density in the warp direction of 30 piles/10 cm, and a pile length of 8 mm to form a pile layer including cut piles having a pile weight of 557 g/m². Next, 763 g/m² of styrene butadiene latex was applied to the back surface of the carpet textile stuff using a coating treatment machine to give a carpet.

### (Evaluation of flame retardant grade)

The resulting carpet had a good flame resistance, and passed all of the flame retardant test for railway vehicle in Japan, the 45-degree micro-burner test under the Fire Service Act, and the flame retardant test for automotive interior materials.

### Example 2

### (Manufacture of ground fabric)

Drawn PPS fibers and flame retardant fibers were mixed by an opener, then further mixed by a blower, and thereafter the mixed fibers were passed through a carding machine to prepare webs. The resulting webs were laminated by a cross-lapper, and processed by a needle punching machine to form a nonwoven fabric. Thus, a nonwoven fabric including drawn PPS fibers and flame retardant fibers was obtained. The weight ratio of the drawn PPS fibers to the flame retardant fibers in the nonwoven fabric was 60 to 40, and the nonwoven fabric had a weight per unit area of 173 g/m².

### (Manufacture of carpet)

The resulting ground fabric was tufted as in Example 1 to form a pile layer including cut piles having a pile weight of 553 g/m². Next, 741 g/m² of styrene butadiene latex was applied to the back surface of the carpet textile stuff as in Example 1 to give a carpet.

### (Evaluation of flame retardant grade)

The resulting carpet had a good flame resistance, and passed all of the flame retardant test for railway vehicle in Japan, the 45-degree micro-burner test under the Fire Service Act, and the flame retardant test for automotive interior materials.

### Example 3

A pile layer having a pile weight of 1187 g/m² was formed as in Example 1 except that the tufting was performed at the following pile densities: density in the weft direction: 50 picks/10 cm, density in the warp direction: 45 threads/10 cm. Next, 825 g/m² of styrene butadiene latex was applied to the back surface of the carpet textile stuff using a coating treatment machine to give a carpet. Furthermore, a phosphorus-based flame retardant was sprayed on the pile side of the resulting carpet.

### (Evaluation of flame retardant grade)

The resulting carpet had a good flame resistance, and passed all of the flame retardant test for railway vehicle in Japan, the 45-degree micro-burner test under the Fire Service Act, and the flame retardant test for automotive interior materials.

### Comparative Example 1

A ground fabric having a weight per unit area of 180 g/m² was obtained as in Example 1 except that the spun yarns constituting the ground fabric were changed to spun yarns of flame resistant fibers. A carpet was manufactured as in Example 1 using the resulting ground fabric. The pile weight was 550 g/m², and the amount of styrene butadiene latex applied as a backing layer was 758 g/m².

The resulting carpet failed all the tests.

### Comparative Example 2

A ground fabric having a weight per unit area of 177 g/m² was obtained as in Example 1 except that the spun yarns constituting the ground fabric were changed to spun yarns using drawn PPS fibers. A carpet was manufactured as in Example 1 using the resulting ground fabric. The pile weight was 550 g/m², and the amount of styrene butadiene latex applied as a backing layer was 787 g/m².

The resulting carpet passed the flame retardant test for automotive interior materials, but failed the flame retardant test for railway vehicle in Japan and the 45-degree micro-burner test under the Fire Service Act.

### Comparative Example 3

A ground fabric having a weight per unit area of 163 g/m² was obtained as in Example 1 except that the spun yarns constituting the ground fabric were changed to spun yarns using carbon fibers. A carpet was manufactured as in Example 1 using the resulting ground fabric. The pile weight was 589 g/m², and the amount of styrene butadiene latex applied as a backing layer was 760 g/m².

The resulting carpet passed the flame retardant test for automotive interior materials, but failed the flame retardant test for railway vehicle in Japan and the 45-degree micro-burner test under the Fire Service Act.

### Comparative Example 4

A ground fabric having a weight per unit area of 179 g/m² was obtained as in Example 1 except that the spun yarns constituting the ground fabric were changed to spun yarns using drawn polyester fibers. A carpet was manufactured as in Example 1 using the resulting ground fabric. The pile weight was 580 g/m², and the amount of styrene butadiene latex applied as a backing layer was 755 g/m².

The resulting carpet failed all the tests.

**[Table 1]**

| | | | Example 1 | Example 2 | Example 3 | Comparative Example 1 | Comparative Example 2 | Comparative Example 3 | Comparative Example 4 |
|---|---|---|---|---|---|---|---|---|---|
| Carpet design | Ground fabric layer | Method for manufacture | Woven | Needle punch | Woven | Woven | Woven | Woven | Woven |
| | | Non-melting fiber A Content (%) | Flame resistant fiber 40wt% | Flame resistant fiber 10wt% | Flame resistant fiber 70wt% | Flame resistant fiber 100wt% | | | |
| | | Thermoplastic fiber B Content (%) | PPS fiber 60wt% | PPS fiber 90wt% | PPS fiber 30wt% | | PPS fiber 100wt% | | |
| | | Other fibers Content (%) | | | | | | Carbon fiber 100wt% | Polyester fiber 100wt% |
| | | Weight per unit area (g/m²) | 187 | 173 | 187 | 180 | 177 | 163 | 179 |
| | Pile layer (Tufted layer) | Tufted fiber | Nylon | Nylon | Nylon + phosphorus-based flame retardant spray | Nylon | Nylon | Nylon | Nylon |
| | | Weight per unit area (g/m²) | 557 | 553 | 1187 | 550 | 550 | 589 | 580 |
| | Backing layer | Resin for backing process | Styrene butadiene latex | Styrene butadiene latex | Styrene butadiene latex | Styrene butadiene latex | Styrene butadiene latex | Styrene butadiene latex | Styrene butadiene latex |
| | | Weight per unit area (g/m²) | 763 | 741 | 825 | 758 | 787 | 760 | 755 |
| | Total weight per unit area (g/m²) | | 1507 | 1467 | 2199 | 1988 | 1514 | 1512 | 1514 |
| Performance | Flame retardant grade | Flame retardant test for railway vehicle in Japan | A | A | A | F | F | F | F |
| | | 45 Degree micro-burner test under the Fire Service Act | A | B | B | F | F | F | F |
| | | Flame retardant test for automotive interior materials | A | B | A | F | B | B | F |

### INDUSTRIAL APPLICABILITY

The present invention provides a carpet that has an excellent flame resistance, and is suitable for use in a seat for vehicles such as a railway carriage, an automobile, and a ship, or in flooring of houses, offices, and the like.

### DESCRIPTION OF REFERENCE SIGNS

- 1:: Pile layer
- 2:: Ground fabric layer
- 3:: Skin layer
- 4:: Backing layer

## Claims

1. A carpet comprising:
i) a pile layer (1);
ii) a skin layer (3) including a ground fabric layer (2) that contains a non-melting fiber A, and a carbide-forming type thermoplastic fiber B having an LOI value according to ISO 4589-2 (1996) (JIS K 7201-2 (2007)) of 25 or more; and
iii) a backing layer (4),
**characterized in that**
said non-melting fiber A has a high-temperature shrinkage rate of 3% or less, determined as described in the specification, and a thermal conductivity according to ISO 22007-3 (2008) of 0.060 W/m·K or less.

2. The carpet according to claim 1, wherein the content of the non-melting fiber A in the ground fabric layer (2) is 20 to 80% by weight.

3. The carpet according to claim 1 or 2, wherein the content of the carbide-forming type thermoplastic fiber B in the ground fabric layer (2) is 20 to 80% by weight.

4. The carpet according to any one of claims 1 to 3, wherein the non-melting fiber A in the ground fabric layer (2) is a flame resistant fiber or a meta-aramid-based fiber.

5. The carpet according to any one of claims 1 to 4, wherein the carbide-forming type thermoplastic fiber B in the ground fabric layer (2) is a fiber formed from a resin selected from the group consisting of anisotropic molten polyester, flame-resistant poly(alkylene terephthalate), flame-resistant poly(acrylonitrile-butadiene-styrene), flame-resistant polysulfone, poly(ether-ether-ketone), poly(ether-ketone-ketone), polyether sulfone, polyalylate, polyarylene sulfide, polyphenyl sulfone, polyetherimide, polyamide imide, and a mixture thereof.

6. The carpet according to any one of claims 1 to 5, wherein the carbide-forming type thermoplastic fiber B in the ground fabric layer (2) has a melting point of 300°C or less.

7. The carpet according to any one of claims 1 to 6, wherein the pile layer (1) contains a fiber selected from the group consisting of a polyester-based fiber, a polyamide-based fiber, an acrylic-based fiber, a cellulose-based fiber, a natural fiber, and a mixture thereof.

8. The flame-resistant carpet according to any one of claims 1 to 7, wherein the weight ratio of the pile layer (1) to the ground fabric layer (2) is 5 or less.

9. The flame-resistant carpet according to any one of claims 1 to 8, wherein the weight per unit area is within a range of 300 to 2500 g/m².

## Patentansprüche

1. Teppich, umfassend:
i) eine Florschicht (1)
ii) eine Hautschicht (3) einschließlich einer Grundgewebeschicht (2), die eine nicht-schmelzende Faser A und eine thermoplastische Faser B des karbidbildenden Typs mit einem LOI-Wert gemäß ISO 4589-2 (1996) (JIS K 7201-2 (2007)) von 25 oder mehr enthält, und
iii) eine Stützschicht (4),
**dadurch gekennzeichnet, dass**
die nicht-schmelzende Faser A eine Hochtemperatur-Schrumpfungsrate von 3% oder weniger, bestimmt wie in der Beschreibung beschrieben, und eine Wärmeleitfähigkeit gemäß ISO 22007-3 (2008) von 0,060 W/m·K oder weniger aufweist.

2. Teppich nach Anspruch 1, wobei der Anteil der nicht-schmelzenden Faser A in der Grundgewebeschicht (2) 20 bis 80 Gew.-% beträgt.

3. Teppich nach Anspruch 1 oder 2, wobei der Anteil der thermoplastischen Faser B des karbidbildenden Typs in der Grundgewebeschicht (2) 20 bis 80 Gew.-% beträgt.

4. Teppich nach einem der Ansprüche 1 bis 3, wobei die nicht-schmelzende Faser A in der Grundgewebeschicht (2) eine flammbeständige Faser oder eine Meta-Aramid-basierte Faser ist.

5. Teppich nach einem der Ansprüche 1 bis 4, wobei die thermoplastische Faser B des karbidbildenden Typs in der Grundgewebeschicht (2) eine Faser ist, die aus einem Harz gebildet ist, das aus der Gruppe ausgewählt ist, die anisotropisches geschmolzenes Polyester, flammbeständiges Poly(alkylenterephthalat), flammbeständiges Poly(acrylonitril-butadien-styrol), flammbeständiges Polysulfon, Poly(ether-ether-keton), Poly(ether-keton-keton), Polyethersulfon, Polyalylat, Polyarylensulfid, Polphenylsulfon, Polyetherimid, Polyamidimid und eine Mischung aus diesen umfasst.

6. Teppich nach einem der Ansprüche 1 bis 5, wobei die thermoplastische Faser B des karbidbildenden Typs in der Grundgewebeschicht (2) einen Schmelzpunkt von 300°C oder weniger aufweist.

7. Teppich nach einem der Ansprüche 1 bis 6, wobei die Florschicht (1) eine Faser enthält, die aus der Gruppe ausgewählt ist, die eine Polyester-basierte Faser, eine Polyamidbasierte Faser, eine Acryl-basierte Faser, eine Cellulose-basierte Faser, eine natürliche Faser und eine Mischung aus diesen umfasst.

8. Flammbeständiger Teppich nach einem der Ansprüche 1 bis 7, wobei das Gewichtsverhältnis der Florschicht (1) zu der Grundgewebeschicht (2) 5 oder weniger beträgt.

9. Flammbeständiger Teppich nach einem der Ansprüche 1 bis 8, wobei das Gewicht pro Einheitsfläche in einem Bereich von 300 bis 2500 g/m² liegt.

## Revendications

1. Tapis, comprenant :
i) une couche de poils (1) ;
ii) une couche de peau (3) incluant une couche de tissu de fond (2) qui contient une fibre non fusible A et une fibre thermoplastique B de type formant du carbure ayant une valeur d'ILO selon ISO 4589-2 (1996) (JIS K 7201-(2007)) de 25 ou plus ; et
iii) une couche de dossier (4),
**caractérisé en ce que**
ladite fibre non fusible A a un taux de rétrécissement à haute température de 3 % ou moins, déterminé tel que décrit dans la description, et une conductivité thermique selon ISO 22007-3 (2008) de 0,060 W/mK ou moins.

2. Tapis selon la revendication 1, dans lequel la teneur de la fibre non fusible A dans la couche de tissu de fond (2) est de 20 à 80 % en poids.

3. Tapis selon la revendication 1 ou 2, dans lequel la teneur de la fibre thermoplastique B de type formant du carbure dans la couche de tissu de fond (2) est de 20 à 80 % en poids.

4. Tapis selon l'une quelconque des revendications 1 à 3, dans lequel la fibre non fusible A dans la couche de tissu de fond (2) est une fibre résistante à la flamme ou une fibre à base de méta-aramide.

5. Tapis selon l'une quelconque des revendications 1 à 4, dans lequel la fibre thermoplastique B de type formant du carbure dans la couche de tissu de fond (2) est une fibre formée à partir d'une résine choisie dans le groupe constitué par le polyester fondu anisotrope, un poly(alkylène téréphtalate) résistant à la flamme, le poly(acrylonitrile-butadiène-styrène) résistant à la flamme, la polysulfone résistante à la flamme, le poly(éther-éther-cétone), le poly(éther-cétone-cétone), le polyéther sulfone, le polyalyllate, un poly(sulfure d'arylène), la polyphényl sulfone, un polyétherimide, un polyamide imide, et un mélange de ceux-ci.

6. Tapis selon l'une quelconque des revendications 1 à 5, dans lequel la fibre thermoplastique B de type formant du carbure de la couche de tissu de fond (2) a un point de fusion de 300 °C ou moins.

7. Tapis selon l'une quelconque des revendications 1 à 6, dans lequel la couche de poils (1) contient une fibre choisie dans le groupe constitué par une fibre à base de polyester, une fibre à base de polyamide, une fibre à base d'acrylique, une fibre à base de cellulose, une fibre naturelle, et un mélange de celles-ci.

8. Tapis résistant à la flamme selon l'une quelconque des revendications 1 à 7, dans lequel le rapport en poids entre la couche de poils (1) et la couche de tissu de fond (2) est de 5 ou moins.

9. Tapis résistant à la flamme selon l'une quelconque des revendications 1 à 8, dans lequel le poids par unité de surface est dans une plage allant de 300 à 2 500 g/m².
